# EUROPÄISCHE PATENTSCHRIFT

(11) **EP 1 193 415 B1**
(45) Veröffentlichungstag und Bekanntmachung des Hinweises auf die Patenterteilung: **06.12.2006**
(21) Anmeldenummer: 01121142.2
(22) Anmeldetag: 04.09.2001
(51) Int. Cl.: F16D 23/06

(54) **Synchronisierungsvorrichtung**
Synchronization device
Dispositif de synchronisation

(30) Priorität: 29.09.2000 DE 10048271
(43) Veröffentlichungstag der Anmeldung: 03.04.2002
(73) Patentinhaber: GETRAG Getriebe- und Zahnradfabrik Hermann Hagenmeyer GmbH & Cie KG, 74199 Untergruppenbach (DE)
(72) Erfinder: Nollenberger, Frank, 74399 Walheim (DE)
(74) Vertreter: Steil, Christian

(56) Entgegenhaltungen:
- US-A- 3 524 525
- US-A- 6 053 294
- PATENT ABSTRACTS OF JAPAN vol. 1996, no. 04, 30. April 1996 (1996-04-30) & JP 07 332386 A (ISUZU MOTORS LTD), 22. Dezember 1995 (1995-12-22)
- PATENT ABSTRACTS OF JAPAN vol. 017, no. 410 (M-1455), 30. Juli 1993 (1993-07-30) & JP 05 084538 A (HITACHI POWDERED METALS CO LTD), 6. April 1993 (1993-04-06)

## Beschreibung

Die vorliegende Erfindung betrifft eine Synchronisierungsvorrichtung für ein formschlüssiges Stufengetriebe, insbesondere für ein Kraftfahrzeuggetriebe, mit einer an einer Welle des Stufengetriebes drehfest festgelegten Führungsmuffe, an der eine Schaltmuffe axial verschieblich gelagert ist, einem Kupplungskörper, der mit einem drehbar an der Welle gelagerten Zahnrad drehfest verbunden ist, und einem Synchronring, der (i) durch Anschläge begrenzt relativ zu der Führungsmuffe oder zu dem Kupplungskörper um einen Umschlagwinkelbereich kleiner 360° verdrehbar ist, (ii) zwischen einer ersten axialen Position und einer zweiten axialen Position beweglich ist, in der Reibflächen zum Synchronisieren aneinander anliegen, und (iii) durch ein elastisches Element an die Führungsmuffe bzw. den Kupplungskörper angedrückt wird.

Eine solche Synchronisierungsvorrichtung ist bspw. aus der DE 32 17 950 A1 bekannt.

Synchronisierungsvorrichtungen dienen generell dazu, die Drehzahlen von zwei Drehelementen aneinander anzugleichen, bevor die zwei Elemente in Drehrichtung formschlüssig miteinander verbunden werden.

Bei Sperr-Synchronisierungsvorrichtungen sind Sperrmittel vorhanden, um aus Gründen der Materialschonung zu verhindern, daß ein Formschluß hergestellt wird, wenn die Differenzdrehzahl noch vergleichsweise hoch ist.

Bei einem Synchronisierungsvorgang wird die Schaltmuffe axial versetzt, um zwei Reibflächen miteinander in Berührung zu bringen. Infolge der vorhandenen Drehzahldifferenz wird bei der ersten Kontaktierung der Reibflächen der Synchronring zunächst bis zu einem der Anschläge verdreht. Hierdurch gelangt der Synchronring in eine Sperrstellung, in der ein Durchschalten nicht möglich ist. Diese Phase des Synchronisierungsvorgangs wird auch häufig als Ansynchronisieren bezeichnet. Die axiale Wegstrecke, die der Synchronring bis dahin zurücklegt, wird auch als Vorsynchronweg bezeichnet.

In der Folge des Synchronisierungsvorganges wird die Schaltmuffe weiter bewegt. Durch den axialen Druck auf die Reibflächen wird die Drehzahldifferenz verringert. Mit Erreichen des Gleichlaufs geht das Reibmoment gegen null. Dann läßt sich zum Durchschalten der Synchronring innerhalb des Umschlagwinkelbereiches zurückdrehen. Schließlich wird der Formschluß zwischen Schaltmuffe und Kupplungskörper hergestellt.

Die beschriebene Art der Synchronisierung ist allgemein bekannt. Es gibt eine Vielzahl von unterschiedlich konstruktiven Ausgestaltungen, die unter den Begriffen Einkonus-Synchronisierung, Doppelkonus-Synchronisierung, Außenkonus-Synchronisierung, Sperrbolzen-Synchronisierung, etc., zusammengefaßt sind.

Aus der eingangs genannten DE 32 17 950 A1 ist es bekannt, zwischen Kupplungskörper und Synchronring ein Druckglied verschieblich zu lagern. Das Druckglied bewirkt, daß Kegelreibflächen der Synchronisierungsvorrichtung auf den größtmöglichen Abstand gebracht werden, wenn die Schaltmuffe die Leerlaufstellung einnimmt. Hierdurch werden Reibungsmomente weitestgehend ausgeschaltet, so daß eine Übertragung nennenswerter Drehmomente von der Schaltmuffe über den Synchronring auf das Getriebe nicht mehr möglich ist. Folglich können ungewollte Fortbewegungen des ungebremsten Fahrzeugs vermieden werden.

Aus der DE-OS 1 906 863 ist eine weitere Sperr-Synchronisierungsvorrichtung bekannt. Bei dieser werden ein links und ein rechts neben einer Führungsmuffe angeordneter Synchronring durch eine Mehrzahl von Zugfedern gehalten. Die Zugfedern sind über den Umfang der Synchronringe verteilt angeordnet und sind in entsprechende Ausnehmungen der Synchronringe eingehakt.

Schließlich ist aus der US-A-4,376,475 eine Synchronisierungsvorrichtung bekannt, die als Außenkonus-Synchronisierung ausgebildet ist. Hierbei ist der Synchronring nicht, wie sonst üblich, an der Führungsmuffe begrenzt verdrehbar gelagert, sondern an dem Kupplungskörper. An dem Kupplungskörper ist in Nachbarschaft zu der Führungsmuffe ein Anschlagring vorgesehen. Der Synchronring wird mittels einer Wellfeder in Richtung auf die Führungsmuffe zu gegen den Anschlagring gedrückt. Beim Schalten wird die Schaltmuffe, die an ihrem Innenumfang eine der Konusreibflächen trägt, gegen den Synchronring gedrückt, und zwar gegen die Kraft der Wellfeder.

Sobald die Schaltmuffe wieder in der Leerlaufstellung ist, wird der Synchronring mittels der Wellfeder wieder in eine Position gebracht, in der seine Außenkonusreibfläche benachbart liegt zu der Reibfläche der Schaltmuffe.

Das der Erfindung zugrundeliegende Problem besteht nun darin, eine verbesserte Synchronisierungsvorrichtung anzugeben.

Diese Aufgabe wird bei der eingangs genannten Synchronisierungsvorrichtung dadurch gelöst, daß zwischen der Führungsmuffe bzw. dem Kupplungskörper und dem Synchronring Arretiermittel vorgesehen sind, die die relative Verdrehbarkeit zwischen Synchronring und Führungsmuffe bzw. Kupplungskörper behindern, wenn der Synchronring sich im wesentlichen in der ersten axialen Position befindet, und die deren relative Verdrehbarkeit in der zweiten axialen Position im wesentlichen nicht beeinflussen.

Durch diese Maßnahme können Klappergeräusche verhindert oder verringert werden, die durch ein Hin- und Herschlagen des unbelasteten Synchronrings im Umschlagwinkelbereich der Führungsmuffe hervorgerufen werden.

Generell wird die Neigung des Synchronringes, sich innerhalb des Umschlagwinkelbereiches frei hin- und herzubewegen, bereits durch das elastische Element verringert, mittels dessen der Synchronring an die Führungsmuffe bzw. den Kupplungskörper angedrückt wird.

Um jedoch ein Umschlagen und damit ein Klappern in möglichst allen Betriebszuständen zu verringern, müßte das elastische Element eine hohe Federkraft aufweisen. Denn es soll ja eine radiale Bewegung mit einer Axialkraft verhindert werden. Die hohe Federkraft würde zu erhöhtem Verschleiß, erhöhter Schaltkraft und möglicherweise zu Synchronversagen führen. Wäre die Federkraft hingegen zu gering, könnte ein Hin- und Herschlagen des Synchronrings nicht in allen Betriebszuständen verhindert werden.

Durch zu starke elastische Elemente könnte zudem ein Kratzen der Synchronisierung hervorgerufen werden.

Durch die erfindungsgemäße Maßnahme, Arretiermittel vorzusehen, die die relative Verdrehbarkeit in einer ersten axialen Position behindern oder idealerweise sogar verhindern, kann ein Hin- und Herschlagen des Synchronringes auch bei einer geringen Federkraft des elastischen Elementes wirkungsvoll unterdrückt werden. In der zweiten axialen Position, die im wesentlichen der Position des oben beschriebenen Ansynchronisierens entspricht, ist die Wirkung der Arretiermittel jedoch ausgeschaltet, so daß die relative Verdrehbarkeit im wesentlichen nicht beeinflußt wird. Das heißt, der eigentliche Synchronvorgang wird durch die erfindungsgemäßen Arretiermittel nicht beeinträchtigt.

Das Klappergeräusch wird folglich durch das Zusammenwirken des elastischen Elementes mit den Arretiermitteln verhindert.

Vorzugsweise sind die Arretiermittel formschlüssig ausgebildet.

Auf diese Weise kann ein Hin- und Herschlagen innerhalb des Umschlagwinkelbereiches in der ersten axialen Position sicher unterbunden werden.

Dabei ist es besonders bevorzugt, wenn die Arretiermittel an dem Synchronring wenigstens eine Axialvertiefung und an der Führungsmuffe bzw. dem Kupplungskörper wenigstens eine entsprechende Axialnocke aufweisen, die mittels der elastischen Mittel in die Axialvertiefung einführbar ist.

In einer alternativen Ausführungsform weisen die Arretiermittel an der Führungsmuffe bzw. dem Kupplungskörper wenigstens eine Axialvertiefung und an dem Synchronring wenigstens eine entsprechende Axialnocke auf, die mittels der elastischen Mittel in die Axialvertiefung einführbar ist.

Besonders bevorzugt ist es dabei, wenn die Arretiermittel in radialer Richtung im Bereich einer Außenverzahnung der Führungsmuffe bzw. des Kupplungskörpers angeordnet sind.

Auf diese Weise können die Arretiermittel kompakt ausgebildet werden. Denn der vergleichsweise große Radius erlaubt die Aufnahme vergleichsweise hoher Momente.

Gemäß einer alternativen Ausführungsform sind die Arretiermittel in radialer Richtung in einem Bereich zwischen einer Außenverzahnung der Führungsmuffe bzw. des Kupplungskörpers und der Welle angeordnet.

Da die konstruktiven Freiheitsgrade in diesem Bereich größer sind als im Bereich der Außenverzahnung, können die Arretiermittel so ausgebildet werden, daß eine günstigere Fertigung ermöglicht wird.

Gemäß einer weiteren besonders bevorzugten Ausführungsform ist die Axialvertiefung bzw. die Axialnocke an einer Anschlagnase des Synchronrings angeordnet.

Auch dies hat fertigungstechnisch besondere Vorteile, da die Anschlagnase ohnehin gegenüber der Grundebene des Synchronrings in axialer Richtung vorsteht.

Ferner ist es bei einer bevorzugten Ausführungsform so, daß an dem Synchronring zwei axiale Vertiefungen vorgesehen sind, die in Umfangsrichtung des Synchronrings um eine Entfernung voneinander beabstandet sind, die dem Umschlagwinkelbereich entspricht, und daß an der Führungsmuffe bzw. dem Kupplungskörper eine Axialnocke vorgesehen ist.

Gemäß einer alternativen Ausführungsform sind an der Führungsmuffe bzw. dem Kupplungskörper zwei Axialvertiefungen vorgesehen, die in Umfangsrichtung des Synchronrings um eine Entfernung voneinander beabstandet sind, die dem Umschlagwinkelbereich entspricht, und an dem Synchronring ist eine Axialnocke vorgesehen.

Bei diesen Alternativen ist es vorteilhafterweise möglich, mittels einer Axialnocke den Synchronring in zwei möglichen Endstellungen des Umschlagwinkelbereiches zu halten, wobei die Axialnocke in der einen Endstellung in die eine Axialvertiefung greift und in der anderen Endstellung in die andere Axialvertiefung.

Ferner ist es bevorzugt, wenn eine Mehrzahl von einander zugeordneten Axialnocken/-vertiefungen vorgesehen sind, die in Umfangsrichtung gleichmäßig voneinander beabstandet sind.

Auf diese Weise wird eine gleichmäßige Verteilung der auftretenden Kräfte bei der Arretierung erzielt. Außerdem muß der Synchronring bei der Montage nicht auf Position montiert werden, sondern ist beliebig einlegbar.

Schließlich ist es gemäß einer alternativen Ausführungsform bevorzugt, wenn die Arretiermittel kraftschlüssig ausgebildet sind.

Eine kraftschlüssige Arretierung ist konstruktiv einfacher zu realisieren, bspw. durch spezielle Reibbeschichtungen (z.B. Streusinter auf der Planfläche des Synchronringes), durch Oberflächenrauhigkeiten, bestimmte Oberflächenstrukturen, und/oder durch magnetischen Kraftschluß, bspw. permanentmagnetisch.

Es versteht sich, daß die elastischen Mittel vorzugsweise durch eine Wellfeder gebildet sind.

Ferner versteht sich, daß das Vorsehen der Arretiermittel an dem Synchronring einerseits und der Führungsmuffe bzw. dem Kupplungskörper andererseits die Möglichkeit beinhalten soll, daß solche Arretiermittel an mit diesen Elementen verbundenen Bauteilen (bspw. Axiallager, Anlaufscheiben etc.) vorgesehen sind.

Bei den erwähnten Nocken versteht sich, daß diese beliebig ausgestaltet sein können, bspw. rund oder eckig. Auch die Anzahl ist generell beliebig. Auch können die Nocken durch eine entsprechend profilierte Oberfläche gebildet sein, einschließlich bspw. einer feinen Verzahnung. Auch kann dies durch Zwischenelemente, z.B. Scheiben, Stifte, Mitnehmersteine etc. realisiert sein.

Von der fertigungstechnischen Ausführung her ist eine spanlose Fertigung der Arretiermittel möglich. Dabei ist eine gesinterte Fertigung gegenüber einer geprägten, gestanzten, gerollten etc. Fertigung bevorzugt, da die Arretiermittel beim Sintern kostenneutral in die bestehenden Bauteile mit eingebracht werden können.

Alternativ können die Arretiermittel durch spanende Fertigung hergestellt werden, bspw. gefräst, erodiert, etc.

Auch sind stoffschlüssige Verbindungen möglich, bspw. aufgeschweißt, gelötet, etc.

Es versteht sich ferner, daß die axiale Erstreckung der Arretiermittel an den oben genannten Vorsynchronweg angepaßt sein muß. Dies insbesondere, um zu verhindern, daß die Arretiermittel die relative Verdrehbarkeit in der zweiten axialen Position, also beim Ansynchronisieren, im wesentlichen nicht beeinflussen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1a, 1b, 1c: eine erste Ausführungsform einer erfindungsgemäßen Synchronisierungsvorrichtung in der Draufsicht in drei unterschiedlichen Phasen eines Synchronisierungsvorganges;
- Fig. 2: eine Detailansicht II von Fig. 1a;
- Fig. 3: eine schematische Schnittansicht entlang der Linie III-III von Fig. 1c;
- Fig. 4: eine alternative Ausführungsform einer erfindungsgemäßen Synchronisierungsvorrichtung;
- Fig. 5: eine weitere alternative Ausführungsform einer erfindungsgemäßen Synchronisierungsvorrichtung;
- Fig. 6: eine weitere alternative Ausführungsform einer erfindungsgemäßen Synchronisierungsvorrichtung;
- Fig. 7a und 7b: eine weitere Ausführungsform einer erfindungsgemäßen Synchronisierungsvorrichtung in zwei unterschiedlichen Arretierungsstellungen;
- Fig. 8: eine weitere alternative Ausführungsform einer erfindungsgemäßen Synchronisierungsvorrichtung; und
- Fig. 9: eine schematische Schnittansicht entlang der Linie IX-IX von Fig. 8.

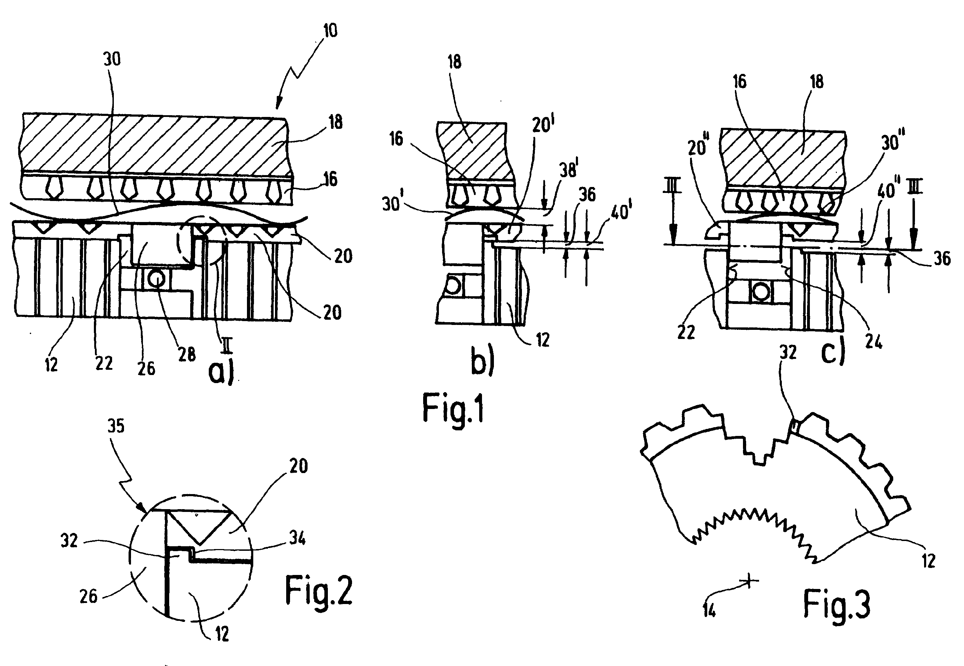

In den Fig. 1 bis 3 ist eine erfindungsgemäße Synchronisierungsvorrichtung generell mit der Bezugsziffer 10 bezeichnet.

Die Synchronisierungsvorrichtung 10 ist als Sperr-Synchronisierung ausgebildet und beinhaltet eine Führungsmuffe 12, die drehfest mit einer Welle 14 (Fig. 3) verbunden ist. An einem an der Welle 14 drehbar gelagerten Losrad 18 ist ein Kupplungskörper 16 mit einer nicht näher bezeichneten Eingriffsverzahnung befestigt. Der Kupplungskörper 16 kann drehfest mit dem Losrad 18 verbunden sein oder einstückig mit diesem ausgebildet sein.

Zwischen der Führungsmuffe 12, die im Stand der Technik häufig auch als Synchronkörper oder Synchronnabe bezeichnet wird, und dem Kupplungskörper 16 ist ein Synchronring 20 angeordnet.

Der Synchronring 20 ist so gelagert, daß er sich generell mit der Führungsmuffe 12 mit dreht, jedoch gegenüber dieser um einen Umschlagwinkelbereich von einigen Grad, jedenfalls deutlich kleiner als 360°, verdrehbar ist.

Zu diesem Zweck weist der Synchronring 20 eine sich in axialer Richtung zu der Führungsmuffe 12 hin erstreckende Anschlagnase 26 auf. An der Führungsmuffe 12 ist eine Axialausnehmung vorgesehen, in die die Anschlagnase 26 eingeführt ist und die für die Anschlagnase 26 zwei Anschläge 22, 24 (Fig. 1c) bildet.

In der Darstellung der Fig. 1a ist ferner ein Federkanal 28 zur Aufnahme einer Feder für ein an sich bekanntes Druckstück (nicht näher bezeichnet) gezeigt. Das Druckstück drückt von innen gegen eine nicht dargestellte Schaltmuffe (in der Darstellung der Fig. 1a aus der Zeichnungsebene heraus), die axial verschieblich an und drehfest mit der Führungsmuffe 12 ausgebildet ist.

Ferner ist zwischen dem Synchronring 20 und der Anordnung aus Losrad 18 und Kupplungskörper 16 ein elastisches Element in Form einer ringförmigen Wellfeder 30 angeordnet. Die Wellfeder 30 stützt sich an der Anordnung aus Losrad 18 und Kupplungskörper 16 ab und drückt den Synchronring 20 gegen die Führungsmuffe 12.

Die Darstellung der Fig. 1a entspricht einer Leerlaufstellung der Synchronisierungsvorrichtung 10, bei der der Synchronring 20 direkt an der Führungsmuffe 12 anliegt.

Es versteht sich, daß auf der anderen Seite der Führungsmuffe 12 eine weitere Synchronisierungsvorrichtung vorgesehen sein kann, wie es im Stand der Technik an sich bekannt ist.

Die Synchronisierungsvorrichtung wird vorzugsweise in einem formschlüssigen Stufengetriebe für ein Kraftfahrzeug, insbesondere einen Personenkraftwagen eingesetzt. Das Stufengetriebe kann ein bspw. handgeschaltetes Stufengetriebe oder ein automatisiertes Handschaltgetriebe sein.

Von der Funktionsweise der eigentlichen Synchronisierung her ist die Synchronisierungsvorrichtung 10 im wesentlichen genauso ausgebildet wie im Stand der Technik.

Aus dem in Fig. 1a gezeigten Zustand wird zunächst die Schaltmuffe in Richtung auf das Losrad 18 zu in axialer Richtung bewegt. Dabei wird der Synchronring 20 aufgrund des nicht näher dargestellten Druckstückes mitgenommen. Sobald eine - in der Regel konische - Reibfläche des Synchronrings in Anlage gelangt an eine - entsprechend konische - Reibfläche des Kupplungskörpers, wird der Synchronring 20 relativ zu der Führungsmuffe 12 und der Schaltmuffe bis zu einem der Anschläge 22, 24 verdreht. Dieser Zustand ist in Fig. 1c gezeigt, bei dem die Anschlagnase 26 an dem linken Anschlag 22 anliegt. Diese Phase des Synchronisierungsvorganges nennt man auch Ansynchronisieren.

Der von dem Synchronring 20 von der Darstellung der Fig. 1a bis zur Darstellung der Fig. 1c zurückgelegte Weg wird auch als Vorsynchronweg bezeichnet.

Im weiteren Verlauf des Synchronisierungsvorganges wird die Schaltmuffe weiter bewegt. Eine Klaueninnenverzahnung der Schaltmuffe und eine Klauenaußenverzahnung des Synchronringes 20 berühren sich, und es beginnt die Hauptsynchronisierung. Der Synchronring 20 befindet sich in einer Sperrstellung, so daß die Schaltmuffe in axialer Richtung zunächst nicht weiter bewegt werden kann.

Mit dem Erreichen des Gleichlaufes zwischen der Führungsmuffe 12 und dem Losrad 18 geht das Reibmoment zwischen den Reibflächen des Synchronringes 20 und des Kupplungskörpers 16 gegen null. Folglich läßt sich der Synchronring 20 bei fortschreitender Axialkraft der Schaltmuffe gegenüber der Führungsmuffe 12 wieder zurückdrehen. Die Klaueninnenverzahnung der Schaltmuffe wird durch die Klauenaußenverzahnung des Synchronringes 20 hindurch geschoben und gelangt in Eingriff mit einer Klauenaußenverzahnung des Kupplungskörpers 16. In diesem Zustand ist der Formschluß zwischen der Führungsmuffe 12 und dem Losrad 18 hergestellt.

Die Synchronisierungsvorrichtung 10 weist erfindungsgemäß zur Verhinderung eines Umschlagklapperns des Synchronringes 20 in der Leerlaufstellung zwischen den Anschlägen 22 und 24 Arretiermittel 35 auf. Diese sind im Detail in Fig. 2 gezeigt.

Die Arretiermittel 35 weisen an der Führungsmuffe 12 eine in Richtung zum Synchronring 20 weisende Axialnocke 32 und an dem Synchronring eine entsprechende Axialvertiefung 34 auf.

Die axiale Länge 36 (siehe Fig. 1c) der Axialnocke 32 ist so gewählt, daß sie in jedem Fall kleiner ist als eine Strecke 40'' (siehe Fig. 1c), die dem Vorsynchronweg entspricht.

In Fig. 1 ist bei 38 generell der Abstand zwischen dem Synchronring 20 und dem Kupplungskörper 16 gezeigt und bei 40 der Abstand zwischen der Führungsmuffe 12 und dem Synchronring 20.

Die Summe der Strecken 38, 40 ist für alle Betriebszustände im wesentlichen konstant.

Wie es in Fig. 1b gezeigt ist, ist die axiale Länge der Axialnocke 32 etwa gleich einer Strecke 40', die kleiner ist als der Vorsynchronweg 40''.

In dem in Fig. 1a gezeigten Leerlaufzustand verhindert das Eingreifen der Axialnocke 32 in die Axialvertiefung 34, daß der Synchronring 20 zwischen den Anschlägen 22, 24 umschlägt und hierdurch ein Klappern des Getriebes hervorruft. Dabei wird der Synchronring 20 mittels der Wellfeder 30 an die Führungsmuffe 12 angedrückt, um ein Eingreifen der Axialnocke 32 in die Axialvertiefung 34 zu gewährleisten.

Die Kraft der Wellfeder 30 kann jedoch relativ gering sein, da in Umfangsrichtung ein Formschluß zwischen dem Synchronring 20 und der Führungsmuffe 12 hergestellt ist.

Es versteht sich, daß die Axialvertiefung 34 in Umfangsrichtung ein wenig breiter ausgebildet sein muß als die Axialnocke 32, um ein problemloses Einrasten zu gewährleisten. Das hierdurch erzeugte Spiel ist jedoch deutlich geringer als der Umschlagwinkelbereich zwischen den Anschlägen 22, 24.

Wenn zum Einlegen eines Ganges die Schaltmuffe in axialer Richtung bewegt wird und dabei der Synchronring 20 gegen die Kraft der Wellfeder 30 von der Führungsmuffe 12 abgehoben wird, wird die Arretierwirkung der Arretiermittel 35 aufgrund der geringen axialen Länge der Axialnocke 32 bereits deutlich vor (in Fig. 1b) dem Ansynchronisierungsvorgang (Fig. 1c) aufgehoben.

Mit anderen Worten behindern die Arretiermittel 35 den eigentlichen Synchronisierungsvorgang nicht. Da die Federkraft der elastischen Wellfeder 30 vergleichsweise gering ausgebildet werden kann, wird auch hierdurch der Synchronisierungsvorgang nicht nachteilig beeinflußt. Auch kann wegen der geringen Federkraft kein Synchronversagen auftreten, der Verschleiß ist gering und die Schaltkraft niedrig.

Fig. 3 zeigt die Anordnung der Axialnocke 32 im Bereich der Außenverzahnung der Führungsmuffe 12.

Es versteht sich, daß eine Mehrzahl solcher Axialnocken 32, typischerweise drei oder mehr, über den Umfang der Führungsmuffe 12 verteilt sind. Entsprechend sind an dem Synchronring 20 eine Mehrzahl von Axialvertiefungen 34 vorgesehen.

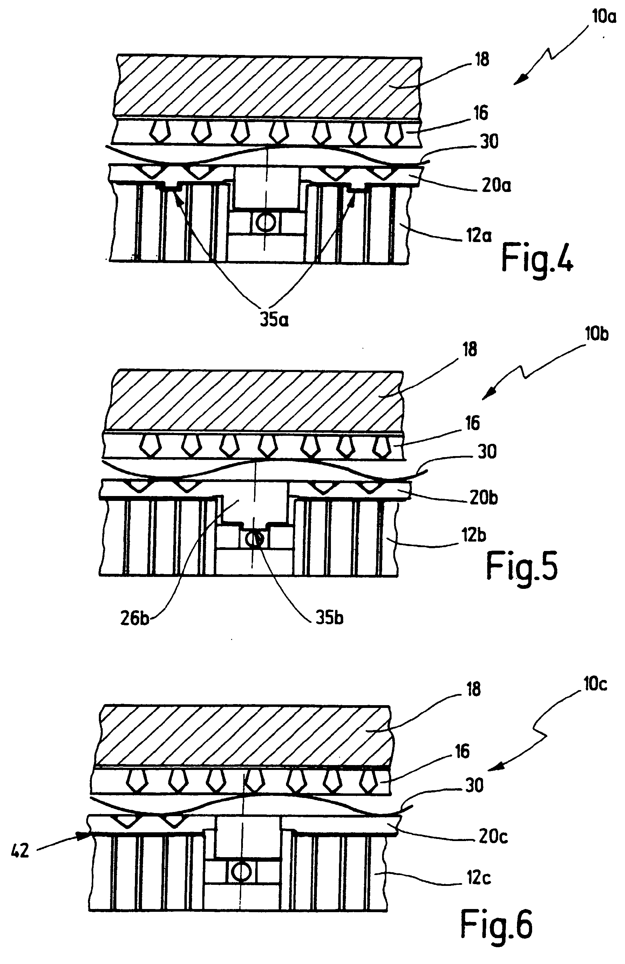

In den Fig. 4 bis 9 sind alternative Ausführungsformen gezeigt.

Die grundlegende Funktionsweise ist bei diesen alternativen Ausführungsformen generell identisch zu der Ausführungsform der Fig. 1 bis 3, soweit nicht ausdrücklich anders erläutert.

Insofern wird auf eine nochmalige Beschreibung zur Vermeidung von Wiederholungen verzichtet.

Die in Fig. 4 gezeigte alternative Ausführungsform einer Synchronisierungsvorrichtung 10a weist alternative Arretiermittel 35a auf.

Dabei weist der Synchronring 20a zur Führungsmuffe 12a hin weisende Axialnocken auf und die Führungsmuffe 12a weist entsprechende Axialvertiefungen auf.

Bei der in Fig. 5 gezeigten alternativen Ausführungsform einer Synchronisierungsvorrichtung 10b sind Arretiermittel 35b vorgesehen, die eine an der Anschlagnase 26 vorstehende Axialnocke und eine entsprechende Vertiefung in der Führungsmuffe 12b aufweisen.

Die in Fig. 6 gezeigte alternative Ausführungsform einer Synchronisierungseinrichtung 10c weist Arretiermittel 42 auf, die kraftschlüssig wirken und nicht formschlüssig, wie die zuvor diskutierten Ausführungsformen.

Der Kraftschluß wird erzielt durch eine spezielle Reibbeschichtung (z.B. Streusinter auf der der Führungsmuffe 12c zugewandten Planfläche des Synchronringes 20c), durch Oberflächenrauhigkeiten oder spezielle, die Reibung zwischen den Bauteilen 12c, 20c erhöhende Oberflächenstrukturen.

Auch ist es möglich, einen Kraftschluß auf magnetische Art und Weise, beispielsweise durch Vorsehen von Permanentmagneten zu erzielen.

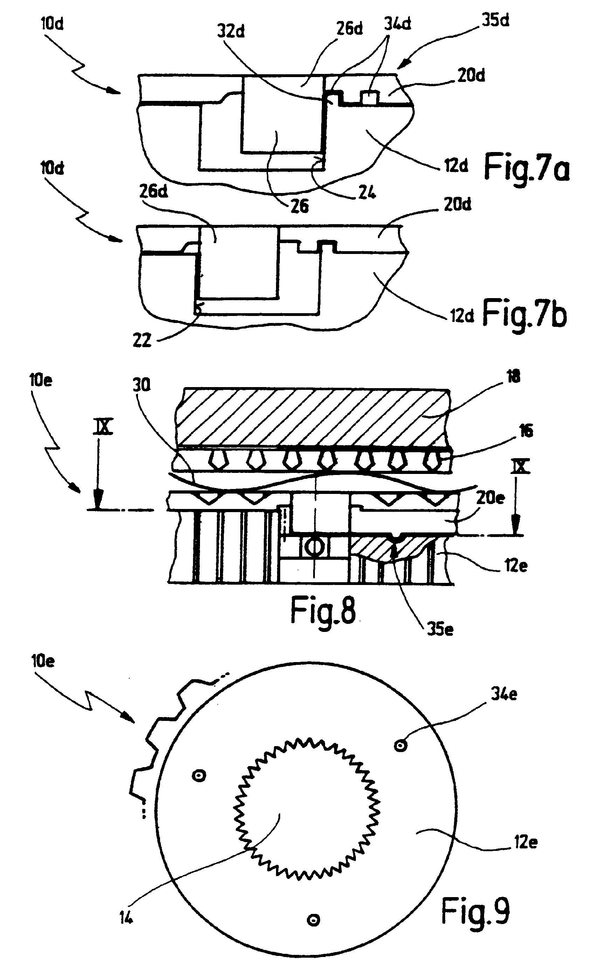

Die in Fig. 7 gezeigte alternative Ausführungsform einer Synchronisierungsvorrichtung 10d umfaßt wiederum formschlüssige alternative Arretiermittel 35d.

Dabei weist die Führungsmuffe 12d, wie bei der Ausführungsform der Fig. 1 bis 3, eine Axialnocke 32d auf. Der Synchronring 20d hingegen weist zwei in Umfangsrichtung benachbarte Axialvertiefungen 34d auf, deren Abstand dem Umschlagwinkelbereich entspricht.

Folglich kann die Axialnocke 32d in einer Position, bei der die Anschlagnase 26 an dem Anschlag 24 anliegt, in eine der Axialvertiefungen 34d greifen. Die Axialnase 32d greift in die andere Axialvertiefung 34d, wenn die Anschlagnase 26d an dem anderen Anschlag anliegt.

Es versteht sich, daß entsprechend zu Fig. 4 auch an dem Synchronring 20d eine Axialnocke vorgesehen sein kann und an der Führungsmuffe 12d zwei Axialvertiefungen in Nachbarschaft zueinander.

Die in den Fig. 8 und 9 gezeigte alternative Ausführungsform einer Synchronisierungsvorrichtung 10e weist weitere alternative Arretiermittel 35e auf.

Die Arretiermittel 35e umfassen drei Axialvertiefungen 34e, die in einem Bereich der Führungsmuffe 12e zwischen der Außenverzahnung und der Welle 14 vorgesehen sind. Entsprechend weist der Synchronring 20e drei Axialnocken in einer Stirnseite auf.

## Patentansprüche

1. Synchronisierungsvorrichtung (10) für ein formschlüssiges Stufengetriebe, insbesondere für ein Kraftfahrzeuggetriebe, mit einer an einer Welle (14) des Stufengetriebes drehfest festgelegten Führungsmuffe (12), an der eine Schaltmuffe axial verschieblich gelagert ist, einem Kupplungskörper (16), der mit einem drehbar an der Welle (14) gelagerten Zahnrad (18) drehfest verbunden ist, und einem Synchronring (20), der (i) durch Anschläge (22,24) begrenzt relativ zu der Führungsmuffe (12) oder zu dem Kupplungskörper um einen Umschlagwinkelbereich kleiner 360° verdrehbar ist, (ii) zwischen einer ersten axialen Position (20) und einer zweiten axialen Position (20'') beweglich ist, in der Reibflächen zum Synchronisieren aneinander anliegen, und (iii) durch ein elastisches Element (30) an die Führungsmuffe (12) bzw. den Kupplungskörper angedrückt wird,
**dadurch gekennzeichnet, daß**
zwischen der Führungsmuffe (12) bzw. dem Kupplungskörper und dem Synchronring (20) Arretiermittel (35) vorgesehen sind, die die relative Verdrehbarkeit zwischen Synchronring (20) und Führungsmuffe (12) bzw. Kupplungskörper behindern, wenn der Synchronring (20) sich im wesentlichen in der ersten axialen Position (20) befindet, und die deren relative Verdrehbarkeit in der zweiten axialen Position (20'') im wesentlichen nicht beeinflussen.

2. Sperr-Synchronisierungsvorrichtung nach Anspruch 1, **dadurch gekennzeichnet, daß** die Arretiermittel (35) formschlüssig ausgebildet sind.

3. Sperr-Synchronisierungsvorrichtung nach Anspruch 2, **dadurch gekennzeichnet, daß** die Arretiermittel (35) an dem Synchronring (20) wenigstens eine Axialvertiefung (34) und an der Führungsmuffe (12) bzw. dem Kupplungskörper wenigstens eine entsprechende Axialnocke (32) aufweisen, die mittels der elastischen Mittel (30) in die Axialvertiefung (34) einführbar ist.

4. Sperr-Synchronisierungsvorrichtung nach Anspruch 2, **dadurch gekennzeichnet, daß** die Arretiermittel (35) an der Führungsmuffe (12) bzw. dem Kupplungskörper wenigstens eine Axialvertiefung (34) und an dem Synchronring (20) wenigstens eine entsprechende Axialnocke (32) aufweisen, die mittels der elastischen Mittel (30) in die Axialvertiefung (34) einführbar ist.

5. Sperr-Synchronisierungsvorrichtung nach einem der Ansprüche 2 bis 4, **dadurch gekennzeichnet, daß** die Arretiermittel (35) in radialer Richtung im Bereich einer Außenverzahnung der Führungsmuffe (12) bzw. des Kupplungskörpers angeordnet sind.

6. Sperr-Synchronisierungsvorrichtung nach einem der Ansprüche 2 bis 4, **dadurch gekennzeichnet, daß** die Arretiermittel (35e) in radialer Richtung in einem Bereich zwischen einer Außenverzahnung der Führungsmuffe (12) bzw. des Kupplungskörpers und der Welle (14) angeordnet sind.

7. Sperr-Synchronisierungsvorrichtung nach einem der Ansprüche 3 - 6, **dadurch gekennzeichnet, daß** die Axialvertiefung bzw. die Axialnocke an einer Anschlagnase (26b) des Synchronrings (20b) angeordnet ist.

8. Sperr-Synchronisierungsvorrichtung nach einem der Ansprüche 3 - 7, **dadurch gekennzeichnet, daß** an dem Synchronring (20d) zwei Axialvertiefungen (34d) vorgesehen sind, die in Umfangsrichtung des Synchronrings (20d) um eine Entfernung voneinander beabstandet sind, die dem Umschlagwinkelbereich entspricht, und daß an der Führungsmuffe (12d) bzw. dem Kupplungskörper eine Axialnocke (32d) vorgesehen ist.

9. Sperr-Synchronisierungsvorrichtung nach einem der Ansprüche 3 - 7, **dadurch gekennzeichnet, daß** an der Führungsmuffe bzw. dem Kupplungskörper zwei Axialvertiefungen vorgesehen sind, die in Umfangsrichtung des Synchronrings um eine Entfernung voneinander beabstandet sind, die dem Umschlagwinkelbereich entspricht, und daß an dem Synchronring eine Axialnocke vorgesehen ist.

10. Sperr-Synchronisierungsvorrichtung nach einem der Ansprüche 3 - 9, **dadurch gekennzeichnet, daß** eine Mehrzahl von einander zugeordneten Axialnocken/-vertiefungen (32,34) vorgesehen sind, die in Umfangsrichtung gleichmäßig voneinander beabstandet sind.

11. Sperr-Synchronisierungsvorrichtung nach Anspruch 1, **dadurch gekennzeichnet, daß** die Arretiermittel (42) kraftschlüssig ausgebildet sind.

## Claims

1. Synchronizing device (10) for a positive-drive multistep transmission, in particular for a motor vehicle transmission, comprising: a guide sleeve (12) mounted non-rotatably on a shaft (14) of the multistep transmission, on which guide sleeve (12) a shift sleeve is mounted axially displaceably; a clutch body (16) which is connected non-rotatably to a gearwheel (18) mounted rotatably on the shaft (14); and a synchronizer ring (20) which (i) is rotatable through an angular range of rotation of less than 360° relative to the guide sleeve (12) or to the clutch body in a manner limited by stops (22, 24), (ii) is movable between a first axial position (20) and a second axial position (20'') in which friction faces abut one another to provide synchronization, and (iii) is pressed against the guide sleeve (12) or the clutch body by an elastic element (30),
**characterized in that**
locking means (35) are provided between the guide sleeve (12) or the clutch body and the synchronizer ring (20), which locking means (35) prevent relative rotatability between the synchronizer ring (20) and the guide sleeve (12) or the clutch body when the synchronizer ring (20) is located substantially in the first axial position (20), and which locking means (35) substantially do not influence the relative rotatability of said components in the second axial position (20'').

2. Locking-synchronizing device according to claim 1, **characterized in that** the locking means (35) are configured to have a positive fit.

3. Locking-synchronizing device according to claim 2, **characterized in that** the locking means (35) include at least one axial recess (34) on the synchronizer ring (20) and at least one corresponding axial projection (32) on the guide sleeve (12) or the clutch body, which axial projection (32) can be inserted into the axial recess (34) with the aid of or using the elastic means (30).

4. Locking-synchronizing device according to claim 2, **characterized in that** the locking means (35) include at least one axial recess (34) on the guide sleeve (12) or the clutch body and at least one corresponding axial projection (32) on the synchronizer ring (20), which axial projection (32) can be inserted into the axial recess (34) by with the aid of or using the elastic means (30).

5. Locking-synchronizing device according to any one of claims 2 to 4, **characterized in that** the locking means (35) are arranged in the radial direction in the region of an external toothing of the guide sleeve (12) or of the clutch body.

6. Locking-synchronizing device according to any one of claims 2 to 4, **characterized in that** the locking means (35e) are arranged in the radial direction in a region between an external toothing of the guide sleeve (12) or of the clutch body and the shaft (14).

7. Locking-synchronizing device according to any one of claims 3 to 6, **characterized in that** the axial recess or the axial projection is arranged on a stop dog (26b) of the synchronizer ring (20b).

8. Locking-synchronizing device according to any one of claims 3 to 7, **characterized in that** two axial recesses (34d) are provided on the synchronizer ring (20d), which axial recesses (34d) are spaced apart from one another in the circumferential direction of the synchronizer ring (20d) by a distance which corresponds to the angular range of rotation, and **in that** one axial projection (32d) is provided on the guide sleeve (12d) or the clutch body.

9. Locking-synchronizing device according to any one of claims 3 to 7, **characterized in that** two axial recesses are provided on the guide sleeve or the clutch body, which axial recesses are spaced apart from one another in the circumferential direction of the synchronizer ring by a distance which corresponds to the angular range of rotation, and **in that** one axial projection is provided on the synchronizer ring.

10. Locking-synchronizing device according to any one of claims 3 to 9, **characterized in that** a multiplicity of mutually associated axial projections/recesses (32, 34) are provided which are spaced apart uniformly from one another in the circumferential direction.

11. Locking-synchronizing device according to claim 1, **characterized in that** the locking means (42) are configured to have a non-positive fit.

## Revendications

1. Dispositif de synchronisation (10) pour un engrenage réducteur à accouplement craboté, en particulier pour une boîte de vitesses de véhicule à moteur, avec un manchon de guidage (12), solidaire en rotation d'un arbre (14) de l'engrenage réducteur, sur lequel un manchon de commande est monté de manière à pouvoir se déplacer axialement, avec un élément d'accouplement (16) solidaire en rotation d'une roue dentée (18) qui est montée de manière à pouvoir tourner sur l'arbre (14), et avec une bague de synchronisation (20) qui (i) peut tourner par rapport au manchon de guidage (12) ou par rapport à l'élément d'accouplement dans une plage d'angle de basculement inférieure à 360° limitée par des butées (22, 24), (ii) qui peut se déplacer entre une première position axiale (20) et une deuxième position axiale (20") dans laquelle des surfaces de friction sont en contact l'une contre l'autre pour la synchronisation et (iii) qui est comprimée par un élément élastique (30) contre le manchon de guidage (12) ou contre l'élément d'accouplement,
**caractérisé en ce que**
il est prévu entre le manchon de guidage (12) ou l'élément d'accouplement et la bague de synchronisation (20) des moyens de blocage (35) qui empêchent une rotation relative possible entre la bague de synchronisation (20) et le manchon de guidage (12) ou l'élément d'accouplement lorsque la bague de synchronisation (20) se trouve sensiblement dans la première position axiale (20) et qui n'influent pas sensiblement sur leur rotation relative possible dans la deuxième position axiale (20").

2. Dispositif de synchronisation à verrouillage selon la revendication 1, **caractérisé en ce que** les moyens de blocage (35) sont du type à accouplement craboté.

3. Dispositif de synchronisation à verrouillage selon la revendication 2, **caractérisé en ce que** les moyens de blocage (35) présentent sur la bague de synchronisation (20) au moins un creux axial (34) et sur le manchon de guidage (12) ou sur l'élément d'accouplement au moins un taquet axial (32) correspondant qui peut s'engager dans le creux axial (34) sous l'action des moyens élastiques (30).

4. Dispositif de synchronisation à verrouillage selon la revendication 2, **caractérisé en ce que** les moyens de blocage (35) présentent sur le manchon de guidage (12) ou sur l'élément d'accouplement au moins un creux axial (34) et sur la bague de synchronisation (20) au moins un taquet axial (32) correspondant qui peut s'engager dans le creux axial (34) sous l'action des moyens élastiques (30).

5. Dispositif de synchronisation à verrouillage selon l'une des revendications 2 à 4, **caractérisé en ce que** les moyens de blocage (35) sont disposés dans le sens radial dans la zone d'une denture extérieure du manchon de guidage (12) ou de l'élément d'accouplement.

6. Dispositif de synchronisation à verrouillage selon l'une des revendications 2 à 4, **caractérisé en ce que** les moyens de blocage (35e) sont disposés dans le sens radial dans une zone située entre une denture extérieure du manchon de guidage (12) ou de l'élément d'accouplement et l'arbre (14).

7. Dispositif de synchronisation à verrouillage selon l'une des revendications 3 à 6, **caractérisé en ce que** le creux axial ou le taquet axial est disposé sur une came de butée (26b) de la bague de synchronisation (20b).

8. Dispositif de synchronisation à verrouillage selon l'une des revendications 3 à 7, **caractérisé en ce qu'**il est prévu sur la bague de synchronisation (20d) deux creux axiaux (34d) qui sont espacés l'un de l'autre dans le sens de la circonférence de la bague de synchronisation (20d) d'une distance qui correspond à la plage d'angle de basculement et **en ce qu'**il est prévu un taquet axial (32d) sur le manchon de guidage (1 2d) ou sur l'élément d'accouplement.

9. Dispositif de synchronisation à verrouillage selon l'une des revendications 3 à 7, **caractérisé en ce qu'**il est prévu sur le manchon de guidage ou sur l'élément d'accouplement deux creux axiaux qui sont espacés dans le sens de la circonférence de la bague de synchronisation d'une distance qui correspond à la plage d'angle de basculement et **en ce qu'**il est prévu un taquet axial sur la bague de synchronisation.

10. Dispositif de synchronisation à verrouillage selon l'une des revendications 3 à 9, **caractérisé en ce qu'**il est prévu une pluralité de taquets/creux axiaux (32, 34) associés les uns aux autres qui sont uniformément espacés les uns des autres dans le sens de la circonférence.

11. Dispositif de synchronisation à verrouillage selon la revendication 1, **caractérisé en ce que** les moyens de blocage (42) sont du type à liaison par friction.
